Europäisches Patentamt

European Patent Office

Office européen des brevets

(19)

(11) Numéro de publication : **0 126 698**
**B1**

(12) **FASCICULE DE BREVET EUROPÉEN**

(45) Date de publication du fascicule du brevet :
**12.11.86**

(21) Numéro de dépôt : **84420071.7**

(22) Date de dépôt : **18.04.84**

(51) Int. Cl.⁴ : **B 21 D 39/06// B23P11/00**

(54) **Méthode d'assemblage d'un élément annulaire sur un tube métallique en aluminium ou un de ses alliages.**

(30) Priorité : **20.04.83 FR 8306874**

(43) Date de publication de la demande :
**28.11.84 Bulletin 84/48**

(45) Mention de la délivrance du brevet :
**12.11.86 Bulletin 86/46**

(84) Etats contractants désignés :
**DE GB IT NL SE**

(56) Documents cités :
**DE-A- 3 047 382**
**DE-A- 3 129 204**
**GB-A- 933 558**
**US-A- 3 474 519**
**US-A- 4 026 006**

(73) Titulaire : **CEGEDUR SOCIETE DE TRANSFORMA-TION DE L'ALUMINIUM PECHINEY**
**23, Rue Balzac**
**F-75008 Paris (FR)**

(72) Inventeur : **Colas, François**
**10, avenue du Petit Chambord**
**F-92340 Bourg la Reine (FR)**

(74) Mandataire : **Séraphin, Léon et al**
**PECHINEY 28, rue de Bonnel**
**F-69433 Lyon Cedex 3 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 126 698 B1

## 0 126 698

### Description

L'invention se rapporte à une méthode d'assemblage d'un élément annulaire sur un tube métallique de relativement faible épaisseur.

La fixation, par exemple d'un collier, autour d'un tube peut être réalisée de nombreuses façons telles que soudage, frettage, fixation mécanique par vis, etc... Cependant, toutes ces opérations sont longues, complexes et/ou nécessitent des équipements spéciaux.

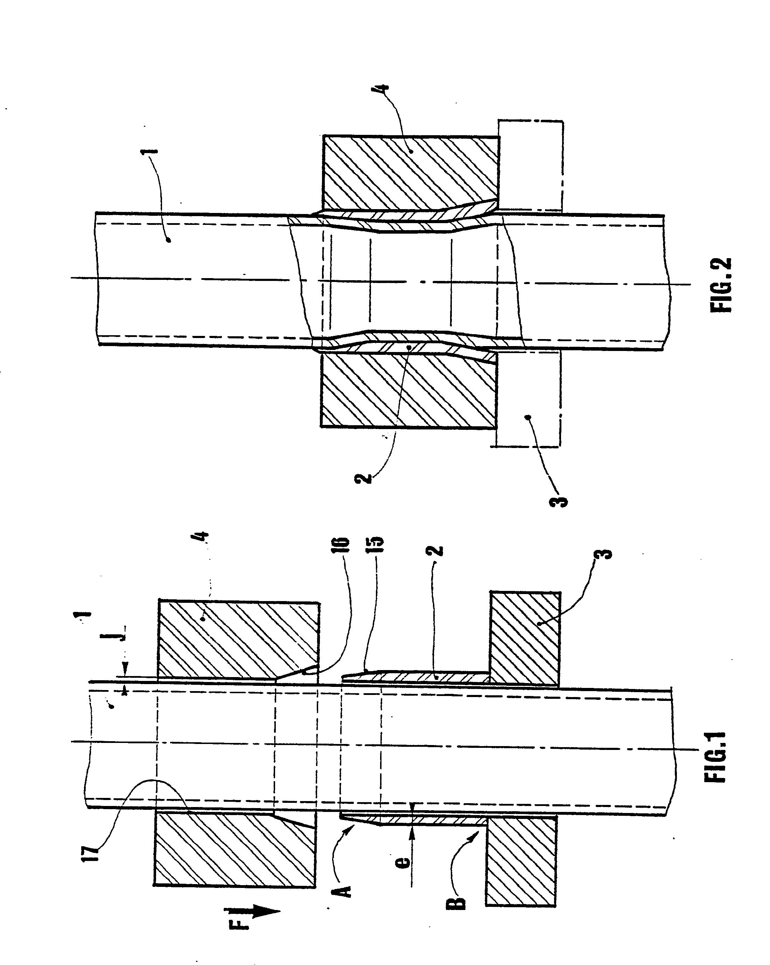

On connaît une méthode d'assemblage d'une pièce annulaire sur un tube par interposition à force d'un manchon intermédiaire entre ces deux pièces. C'est ainsi que le document GB-A-933 558 décrit une méthode de fixation d'une pièce annulaire (22) sur un arbre cannelé (18) par interposition à force d'un manchon conique (61) — fig. 2 ; 3 et 4 — qui assure la solidarisation desdites pièces.

De même, le document DE-A-3047382 décrit l'assemblage d'une pièce annulaire (3) sur un tube (5) par l'intermédiaire d'un manchon (1) emmanché à force entre ces deux pièces.

Cependant, dans les deux cas, la pièce annulaire (22 ou 3 respectivement) est suffisamment massive pour résister, sans se déformer sensiblement, et à plus forte raison, sans se rompre, aux efforts d'emmanchement.

La présente invention se propose de résoudre le problème propre aux éléments annulaires qui présentent au moins partiellement des parois ou parties minces au voisinage de leur ouverture et qui ne résisteraient pas aux efforts d'emmanchement.

Pour cela, on entoure provisoirement la pièce annulaire par une pièce massive, démontable, que nous désignerons par « frette » avant emmanchement, celle-ci étant démontée et éliminée après emmanchement.

La méthode selon l'invention concerne donc l'assemblage d'un élément tubulaire sur un tube comprenant :

a) la mise en place autour d'un tube d'un manchon tubulaire en Al ou un de ses alliages de section transversale analogue et de relativement faible épaisseur, avec un jeu adéquat, une des extrémités du manchon étant préalablement munie d'un chanfrein extérieur ;

b) la mise en place autour du tube d'Al ou un de ses alliages, du côté du chanfrein du manchon, de la pièce annulaire à fixer, qui comprend au moins une ouverture dont les dimensions transversales sont supérieures à celles du tube, mais dont le jeu radial avec celui-ci est inférieur à l'épaisseur du manchon, et qui est munie, côté manchon, d'un chanfrein interne dont les dimensions transversales maximales sont supérieures aux dimensions transversales de l'extrémité libre du chanfrein du manchon ;

c) le déplacement de l'élément annulaire et du manchon l'un vers l'autre, par des moyens connus appropriés et l'introduction à force du manchon entre l'élément annulaire et le tube en déformant plastiquement le manchon et le tube, pour réaliser ainsi l'assemblage, de sorte qu'après l'opération (b) ci-dessus, on entoure provisoirement l'élément annulaire par une pièce complémentaire massive et démontable que nous désignerons par « frette », destinée à résister aux efforts d'éclatement durant l'opération de forçage (c) qui suit, après quoi :

d) on démonte et on élimine ladite frette.

L'opération de forçage (c) peut être effectuée par le mouvement de l'élément annulaire (mobile) vers le manchon (fixe) solidaire par exemple d'une butée provisoire, ou vice-versa (élément annulaire fixe et manchon mobile).

Dans ce procédé, l'élément annulaire, qui peut être de matière quelconque mais suffisamment résistant, est soit monobloc, soit en deux ou plusieurs parties longitudinales assemblées entre elles et autour du tube par des moyens connus, par exemple par boulonnage, clippage ou éventuellement soudage. Dans ce dernier cas, la méthode est utilisable sur des tubes faisant déjà partie d'une structure existante tels que poutres, charpentes, etc...

De même, l'élément annulaire peut comprendre plusieurs ouvertures, présentant diverses directions entre elles, par exemple pour la constitution de nœuds de charpente ou d'échafaudage.

Le manchon peut également être soit monobloc, soit en deux ou plusieurs parties longitudinales et même formé d'une feuille initialement biseautée et roulée sous forme d'un cylindre fendu selon une génératrice, le biseau initial formant le chanfrein.

Dans la méthode décrite ci-dessus, les tubes et les manchons doivent être relativement minces pour être plastiquement déformables, tout en ayant une rigidité suffisante. On a donc, de préférence, les relations suivantes :

$$\frac{1}{25} < \frac{\text{épaisseur du tube}}{\text{diamètre extérieur du tube}} < \frac{1}{4}$$

et l'épaisseur du manchon comprise entre 0,5 mm et 2 fois l'épaisseur du tube.

La résistance mécanique de l'assemblage est évidemment fonction du « serrage » du manchon dans le jeu entre tube et pièce annulaire ainsi que de la longueur de l'assemblage.

On a de préférence les limitations suivantes :

2

$$0,001 < \frac{\text{jeu entre pièce annulaire et tube}}{\text{diamètre extérieur du tube}} < 0,01$$

et longueur du manchon comprise entre 1/10 et 3 fois le diamètre extérieur du tube.

Les angles des chanfreins, par rapport à l'axe, sont en général compris entre 5' et 10° ; ils sont de préférence de valeur égale sur le manchon et sur la pièce annulaire, bien que l'angle du chanfrein de la pièce annulaire puisse être supérieur à celui du chanfrein sur le tube.

La méthode selon l'invention présente, outre sa rapidité d'exécution, les avantages suivants :

— l'assemblage constitue en lui-même un renforcement local de la structure par le triple effet de la surépaisseur, de l'écrouissage du tube et du manchon et du frettage par la pièce annulaire ;

— cette méthode peut être utilisée sur des structures tubulaires déjà en place, en vue de leur renforcement ou de leur réparation ;

— cette méthode peut être mise en œuvre avec une simple presse d'atelier ou même une presse à main, portable et utilisable sur chantiers.

L'invention sera mieux comprise à l'aide des figures et exemples suivants :

La figure 1   représente une vue en coupe axiale de la disposition des éléments avant assemblage.

La figure 2   représente une vue en coupe axiale des éléments après assemblage.

La figure 3   représente une vue en plan et en coupe axiale d'un élément annulaire à parois minces, enserré dans une frette provisoire.

Bien que les exemples qui suivent soient relatifs à un élément annulaire et un tube de sections circulaires, la méthode est évidemment applicable à un élément annulaire et un tube possédant d'autres sections transversales telles que carrée, rectangulaire, ovale, polygonale, etc... de préférence à angles arrondis et à faces bombées convexes.

Sur un tube 1 de section circulaire, est placé un manchon cylindrique 2 qui repose sur une butée amovible 3 par son extrémité B et dont l'autre extrémité A est chanfreinée extérieurement en 15. L'élément annulaire 4 muni d'une ouverture 17 est également enfilé sur le tube 1, son extrémité côté A étant chanfreinée intérieurement en 16. En forçant l'élément 4 sur le manchon 2 suivant la direction F, parallèle à l'axe du tube, du manchon et de l'élément annulaire, on obtient l'assemblage représenté figure 2, où le tube et le manchon ont été déformés plastiquement par rétreint lors du forçage.

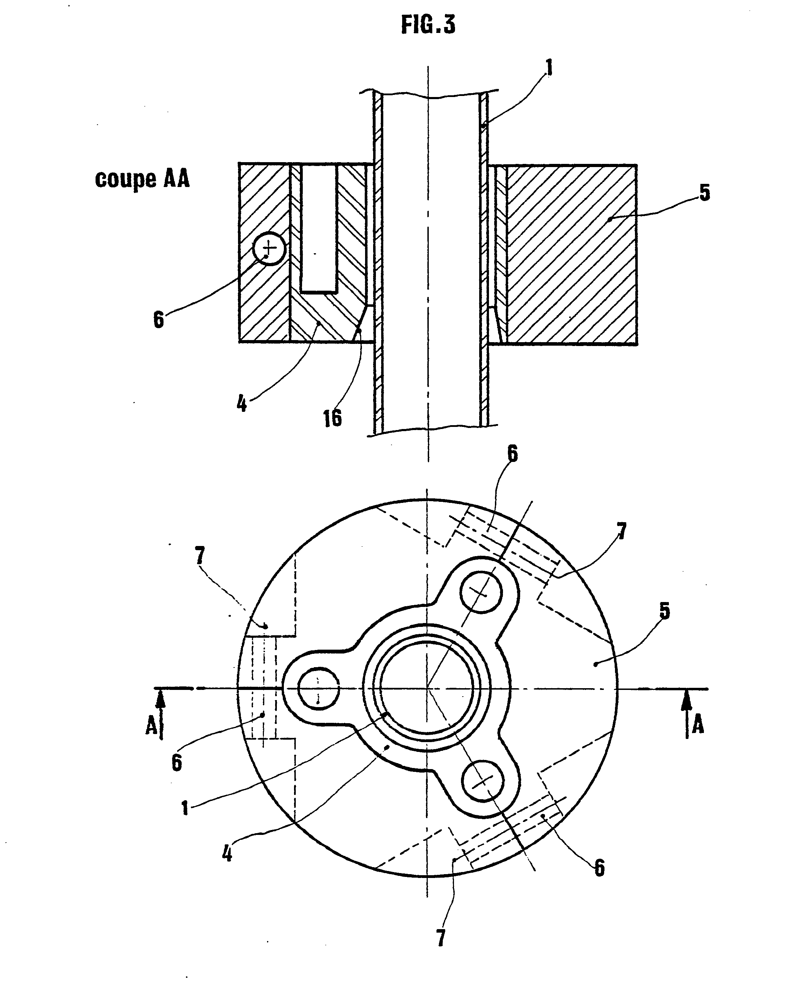

La figure 3 représente, avant assemblage, un élément annulaire 4 à parois relativement minces, de forme étoilée à trois branches, enserré dans une frette 5 démontable en trois parties, qui sont assemblées par des boulons 7 — non représentés — passés à travers les trous de fixation 6.

## Exemple

Autour d'un tube en 5086 selon la désignation de l'Aluminum Association, état 3/4 dur de 32 mm de diamètre extérieur, et de 2 mm d'épaisseur, a été placé un manchon en AG S (6181) état T5 de 32,5 mm de diamètre intérieur et de 2 mm d'épaisseur, et de 40 mm de long. A l'extrémité de celui-ci a été usiné un chanfrein de 7° de pente par rapport à l'axe du tube sur 15 mm de long.

Sur la pièce annulaire en AG S (6181) état T6 munie d'une ouverture de 32,5 mm de diamètre intérieur et de 40 mm de long, a été usiné un chanfrein intérieur de 7° sur 15 mm de long.

Le manchon a été graissé au suif et les pièces ont été assemblées à l'aide d'une presse de 20 T, le manchon étant disposé sur la table et l'effort suivant le sens F transmis à la pièce annulaire par l'intermédiaire d'un élément de tube épais, lui-même enfilé sur le tube à assembler.

L'assemblage ainsi obtenu résiste à un effort de traction longitudinal de 5T dans le sens F et de 2,5T dans le sens opposé à F.

L'invention trouve son application dans les domaines suivants : charpente, ponts, passerelles, échafaudages, cellules aéronautiques (ULM), étagères et rayonnages, plateformes marines, etc...

## Revendications

1. Méthode d'assemblage d'un élément tubulaire (4) sur un tube (2) comprenant :

a) la mise en place autour d'un tube (1) d'un manchon tubulaire (2) en Al ou un de ses alliages de section transversale analogue et de relativement faible épaisseur, avec un jeu adéquat, une des extrémités du manchon étant préalablement munie d'un chanfrein extérieur (15) ;

b) la mise en place autour du tube (1) en Al ou un de ses alliages, du côté du chanfrein du manchon, de la pièce annulaire (4) à fixer, qui comprend au moins une ouverture (17) dont les dimensions transversales sont supérieures à celles du tube, mais dont le jeu radial (j) avec celui-ci est inférieur à l'épaisseur (e) du manchon, et qui est munie, côté manchon, d'un chanfrein interne (16) dont les dimensions transversales maximales sont supérieures aux dimensions transversales de l'extrémité libre du chanfrein du manchon (15) ;

c) le déplacement de l'élément annulaire (4) et du manchon (2) l'un vers l'autre, par des moyens connus appropriés et l'introduction à force du manchon (2) entre l'élément annulaire (4) et le tube (1) en déformant plastiquement le manchon et le tube, pour réaliser ainsi l'assemblage, de sorte qu'après l'opération (b) ci-dessus on entoure provisoirement l'élément annulaire (4) par une frette démontable (5), qui est retirée après l'opération (c).

2. Méthode selon la revendication 1, caractérisée en ce que l'épaisseur du tube (1) est comprise entre 1/4 et 1/25 du diamètre (ou des dimensions transversales) extérieur(es) du tube, et en ce que l'épaisseur du manchon (e) est comprise entre 0,5 mm et 2 fois l'épaiseur du tube (1).

3. Méthode selon l'une des revendications 1 ou 2, caractérisée en ce que le jeu (j) entre la pièce annulaire (4) et le tube (1) est compris entre 0,001 et 0,01 fois le diamètre (ou les dimensions transversales) extérieur(es) du tube et en ce que la longueur du manchon est comprise entre 0,1 et 3 fois le diamètre (ou les dimensions transversales) extérieur(es) du tube.

4. Méthode selon l'une des revendications 1 à 3, caractérisée en ce que les angles des chanfreins (15, 16) avec l'axe du tube (1) sont compris entre 5 et 10°.


## Claims

1. A method of assembling a tubular element (4) to a tube (2) comprising :

a) setting in place around a tube (1) a tubular sleeve (2) of Al or one of the alloys thereof which is of a similar cross-section and of relatively small thickness, with an adequate clearance, one of the ends of the sleeve being previously provided with an external chamfer (15) ;

b) setting in place around the tube (1) of Al or one of the alloys thereof, at the side with the chamfer on the sleeve, the annular member (4) to be fixed in place, which comprises at least one opening (17) whose transverse dimensions are greater than those of the tube but whose radial clearance (j) in relation thereto is less than the thickness (e) of the sleeve, and which is provided at the sleeve side with an internal chamfer (16) whose maximum transverse dimensions are greater than the transverse dimensions of the free end of the chamfer of the sleeve (15) ; and

c) displacement of the annular element (4) and the sleeve (2) towards each other by suitable known means and forcing the sleeve (2) into position between the annular element (4) and the tube (1), by plastically deforming the sleeve and the tube, thereby to produce the assembly, such that after foregoing operation (b), the annular element (4) is provisionally surrounded by a removable banding member (5) which is withdrawn after operation (c).

2. A method according to claim 1 characterised in that the thickness of the tube (1) is between one quarter and one twenty fifth of the outside diameter (or the outside transverse dimensions) of the tube, and that the thickness of the sleeve (e) is between 0.5 mm and twice the thickness of the tube (1).

3. A method according to one of claims 1 and 2 characterised in that the clearance (j) between the annular member (4) and the tube (1) is between 0.001 and 0.01 times the outside diameter (or the outside transverse dimensions) of the tube and that the length of the sleeve is between 0.1 and 3 times the outside diameter (or the outside transverse dimensions) of the tube.

4. A method according to one of claims 1 to 3 characterised in that the angles of the chamfers (15, 16) to the axis of the tube (1) are between 5 and 10°.


## Patentansprüche

1. Montierungsverfahren für ein ringförmiges Element mit einem Rohr, bei dem :

a) ein rohrförmiger Flansch (2) aus Aluminium oder einer Aluminiumlegierung mit einem entsprechenden Querschnitt und relativ kleiner Dicke mit entsprechendem Spiel um das Rohr (1) herum angebracht wird, wobei die Enden des Flansches vorher mit einer äußeren Abflachung (15) versehen worden sind,

b) um das Rohr (1) aus Aluminium oder einer Aluminiumlegierung auf der Seite der Abschrägung des Flansches das zu befestigende Ringstück (4) angebracht wird, das mindestens eine Öffnung (17) aufweist, dessen Querabmessungen größer als die des Rohrs sind, dessen radiales Spiel (j) mit dem Rohr jedoch kleiner als die Dicke (e) des Flansches ist und wobei das Ringstück auf der Seite des Flansches mit einer inneren Abschrägung (16) versehen ist, dessen maximale Querabmessungen größer als die Querabmessungen des freien Endes der Abschrägung des Flansches (15) sind,

c) das Ringelement (4) und der Flansch (2) aufeinander zubewegt werden mit an sich bekannten Mitteln und der Flansch (2) mit Kraft zwischen das ringförmige Element (4) und das Rohr (1) eingefügt wird, wobei der Flansch und das Rohr plastisch verformt werden, um so eine Verbindung herzustellen, derart, daß nach dem Verfahrensschritt b) das Ringelement (4) von einer demontierbaren Frette (5) umgeben wird, die nach dem Verfahrensschritt c) wieder entfernt wird.

2. Montierungsverfahren nach Anspruch 1, dadurch gekennzeichnet, daß die Dicke des Rohrs (1) zwischen 1/4 und 1/25 des Durchmessers (oder der äußeren Querabmessungen des Rohrs) liegt und dadurch, daß die Dicke (e) des Flansches zwischen 0,5 mm und dem zweifachen der Dicke des Rohrs (1) gewählt wird.

3. Montierungsverfahren nach einem der Ansprüche 1 oder 2, dadurch gekennzeichnet, daß das Spiel (j) zwischen dem Ringstück (4) und dem Rohr (1) zwischen dem 0,001- und 0,01-fachen des Außendurchmessers (oder der Querabmessungen) des Rohrs beträgt und dadurch, daß die Länge des Flansches das 0,1- bis 3-fache des Außendurchmessers (oder der Außen-Querabmessung) des Rohrs beträgt.

4. Montierungsverfahren nach einem der Ansprüche 1 bis 3, dadurch gekennzeichnet, daß die Winkel der Abschrägung (15, 16) mit der Rohrachse (1) zwischen 5 und 10° betragen.

**FIG.1**

**FIG.2**

0 126 698

# FIG.3

coupe AA

2